# EUROPEAN PATENT APPLICATION

(11) **EP 2 452 921 A1**
(43) Date of publication of application: **16.05.2012**
(21) Application number: 10382302.7
(22) Date of filing: 16.11.2010
(51) Int. Cl.: C01G 49/14

(54) **Process for producing a modified grade of iron sulphate heptahydrate**

(71) Applicant: Tioxide Europe, S.L., 21080 Huelva (ES)
(72) Inventor: Diago San Andrés, Antonio, 21001 Huelva (ES)
(74) Representative: Johnson, Yvonne Catherine

(57) **Abstract**

The present invention is directed to a process for producing a modified grade of iron sulphate heptahydrate comprising: (i) adding iron sulphate monohydrate and an alkali compound, to iron sulphate heptahydrate; and (ii) mixing the ingredients and allowing the ingredients to react for a time period sufficient to form the modified grade of iron sulphate heptahydrate; and wherein the iron sulphate monohydrate comprises at least 25 weight % iron and at most 3 weight % free acid based on the total weight of the iron sulphate monohydrate.

## Description

### BACKGROUND OF THE INVENTION

### Field of the Invention

The present invention relates to a process or method for producing a modified grade of iron sulphate heptahydrate.

### Background Information

It is widely known that Iron sulphate (II) is a co-product of the process of manufacturing titanium dioxide. Iron sulphate (II) may be produced by crystallization of a sulphate solution, which can take place by cooling the solution by means known in the art such as vacuum refrigeration and, when required, evaporation. The iron sulphate produced by this process is an iron sulphate heptahydrate (copperas) with a free moisture content of at least 4% such as 4% - 7%. The copperas product is not easily handled or stored, however, since the iron crystals of the copperas tend to stick to one another causing the product to become dusty while the acid liquid that is present in the copperas tends to leach out and potentially attack the container in which the copperas is stored.

### SUMMARY OF THE INVENTION

The present invention is directed to a process for producing a modified grade of iron sulphate heptahydrate comprising: (i) adding iron sulphate monohydrate and an alkali compound, to iron sulphate heptahydrate; and (ii) mixing the ingredients and allowing the ingredients to react for a time period sufficient to form the modified grade of iron sulphate heptahydrate; and wherein the iron sulphate monohydrate comprises at least 25 weight % iron and at most 3 weight % free acid based on the total weight of the iron sulphate monohydrate.

The present invention also is directed to a process for producing a modified grade of iron sulphate heptahydrate comprising: (i) forming an iron sulphate monohydrate compound wherein the compound comprises at least 25 weight % iron and at most 3 weight % free acid based on the total weight of the iron sulphate monohydrate by heating iron sulphate heptahydrate for a time and at a temperature sufficient to form the iron sulphate compound; (ii) adding the iron sulphate monohydrate compound of step (i) and an alkali compound to a portion of iron sulphate heptahydrate that is to be converted to the modified grade; and (iii) mixing the ingredients of step (ii) and allowing the ingredients to react for a time period sufficient to form the modified grade of iron sulphate heptahydrate.

### DETAILED DESCRIPTION OF THE INVENTION

As used herein, unless otherwise expressly specified, all numbers such as those expressing values, ranges, amounts or percentages may be read as if prefaced by the word "about", even if the term does not expressly appear. Plural encompasses singular and vice versa. For example, although reference is made herein to "an" alkali compound, "an" iron sulphate monohydrate, "an" iron sulphate heptahydrate, a combination (a plurality) of these components can be used in the present invention.

As used herein, "plurality" means two or more.

As used herein, "includes" and like terms means "including without limitation."

When referring to any numerical range of values, such ranges are understood to include each and every number and/or fraction between the stated range minimum and maximum. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

### Process

The present invention is directed to a process for making a modified grade of iron sulphate heptahydrate. It has been surprisingly discovered that by use of the disclosed process a modified grade of iron sulphate heptahydrate, which has low moisture content, is free-flowing, and is non-dusty, can be produced. Accordingly, the modified grade of iron sulphate heptahydrate produced can be stored, handled, and dispensed more readily when compared to other grades of iron sulphate heptahydrate known in the industry.

In some embodiments, the process of the present invention can be generally described as adding the following ingredients, (a) iron sulphate monohydrate, (b) an alkali compound, and (c) iron sulphate heptahydrate, in a process comprising the steps of: (i) adding the iron sulphate monohydrate and the an alkali compound, to the iron sulphate heptahydrate; and (ii) mixing the ingredients and allowing the ingredients to react for a sufficient amount of time to form a modified grade of iron sulphate heptahydrate.

The iron sulphate monohydrate that is used in the present invention typically comprises at least 25 weight % iron, and at most 3 weight % free acid, based on the total weight of the iron sulphate monohydrate. In some embodiments, the iron content of the iron sulphate monohydrate ranges from 26 weight % to 31 weight % iron, such as from 28 weight % to 30 weight %, while the free acid value ranges from 0.01 weight % to 3 weight % (e.g., 1 weight % to 2 weight %).

While any source of iron sulphate monohydrate can be used in the present invention so long as it meets the parameters described in the preceding paragraph, in certain embodiments, the iron sulphate monohydrate compound used in the process described herein can be derived from iron sulphate heptahydrate. For example, in some embodiments, a portion of the iron sulphate heptahydrate material that is to be converted to the modified grade is separated and heated for a time and temperature sufficient in order to convert at least some of the iron sulphate heptahydrate material to iron sulphate monohydrate. For example, in certain embodiments, the iron sulphate heptahydrate material is heated at a temperature of 350°C for a time period ranging from 5 minutes to 30 minutes, thereby forming the iron sulphate monohydrate compound. The iron sulphate monohydrate that is formed can then be used as the iron sulphate monohydrate compound in the process described herein.

The iron sulphate monohydrate compound can be used in an amount ranging from at least 5 weight % to 30 weight % based on the total weight of the ingredients used to form the modified grade of iron sulphate heptahydrate. For example, in certain embodiments, the iron sulphate monohydrate compound is used in amount ranging from 6 weight % to 12 weight %, such as from 8 weight % to 10 weight %, based on the total weight of the ingredients used to form the modified grade of iron sulphate heptahydrate.

The alkali compound that can be used in the present invention can essentially be any alkali compound that is known in the art. Suitable examples of such compounds include, without limitation, compound calcined dolomite, magnesium oxide, calcium oxide, calcium hydroxide, magnesium hydroxide, or combinations thereof.

The alkali compound can be used in an amount ranging from 1 weight % to 10 weight % based on the total weight of the ingredients used to form the modified grade of iron sulphate heptahydrate. In certain embodiments, the alkali compound is utilized in an amount sufficient to raise the pH of the modified grade of iron sulphate heptahydrate to a pH level ranging from 2 to 5, such as 3.

In certain embodiments, the iron sulphate heptahydrate compound used to form the modified grade of iron sulphate heptahydrate is the co-product of the process for manufacturing titanium dioxide. In some embodiments, the iron sulphate heptahydrate has an iron content ranging from 18 weight % to 20 weight %, and a free acid content of at most 3 weight %, based on the total weight of the iron sulphate heptahydrate. In addition to iron, the iron sulphate heptahydrate also comprises an acidic compound, such as sulfuric acid. The acidic compound is typically a result of the formation of the iron sulphate heptahydrate or copperas. Accordingly, in some embodiments, the acidic compound can be present in the iron sulphate heptahydrate at levels ranging from 1.5 weight % to 2 weight % based on the total weight of the ingredients used to form the modified grade of iron sulphate heptahydrate.

All three of the aforementioned ingredients can be mixed together using techniques known in the art such as a front end loader or a solid mixer. Once mixed, the ingredients are mixed for a time period and at a temperature sufficient to form the modified grade of iron sulphate heptahydrate. For example, in certain embodiments, the ingredients are mixed for a period ranging from 15 minutes to 120 minutes at temperature that is at most 120°C. In some embodiments, 24 hours after the mixing stage, the modified grade of iron sulphate heptahydrate is removed from the vessel in which it was formed in order to ensure that no lumping issues with the materials arise. After the modified grade of iron sulphate heptahydrate is formed, the product can be stored in bulk or stored in bags that are known in the art.

In certain embodiments, magnesium sulphate is not added to the ingredients used to form the modified grade of iron sulphate heptahydrate.

One advantage of the present invention is that when the iron sulphate monohydrate compound reacts with the iron sulphate heptahydrate compound that is to be modified, the reaction utilizes or takes up water thereby leaving a dry product that, as stated above, is easily handled, dispensed, and stored. Additionally, the alkali compound can also react with the acidic compound in a manner that also utilizes water thereby contributing to the dryness of the final modified grade of the iron sulphate heptahydrate compound.

Another advantage of the present invention is that the modified grade of iron sulphate heptahydrate could be used in a variety of industries such as those needing some form of iron. For example, the modified grade of iron sulphate heptahydrate could be used to reduce the Cr⁶⁺ in the cement industry. It could, therefore, be used as an additive in the cement mixture. Additionally, it can be used as an iron supplier in the agriculture industry.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the invention which is to be given the full breadth of the claims appended and any and all equivalents thereof. Therefore, any of the features and/or elements which are listed above may be combined with one another in any combination and still be within the breadth of this disclosure.

### EXAMPLE

A specimen of ferrous sulphur heptahydrate, which had a composition described in Table 1, was fed into a hopper mixer.

**Table 1:**

| **Ferrous Sulphate Heptahydrate** | |
|---|---|
| | **Weight % (based on total weight of this component)** |
| FeS0₄·7H₂O | 94.00% |
| H₂SO₄ | 1.50% |
| H₂O | 4.50% |

The source of the ferrous sulphate heptahydrate was from the production of titanium dioxide from ilmenite and the amount of ferrous sulphur heptahydrate added to the hopper mixer was 88% by weight. Accordingly, in this example, 10 tonnes of ferrous sulphate heptahydrate was added to the hopper mixer.

Then 1 tonne of ferrous sulphur monohydrate was added to the hopper, which represented a proportion of 8 % by weight of the feed. The ferrous sulphur monohydrate which was used in this example was obtained from the ferrous sulphate heptahydrate by removing water from the molecule.

Table 2 shows the composition of the ferrous sulphate monohydrate.

**Table 2:**

| **Ferrous Sulphate Monohydrate** | |
|---|---|
| | **Weight % (based on the total weight of this component)** |
| FeS0₄·H₂O | 94.00% |
| (Ca+Mg)₂SO₄ | 1.50% |
| H₂O | 4.50% |

400 kg of calcined dolomite was also added to the hopper. While not being wish to be bound by any particular theory, it is believed that the calcined dolomite (magnesium and calcium oxides) reacted with the free sulphuric acid of the ferrous sulphur heptahydrate thereby forming calcium and magnesium sulphates, which contain hydration water in their respective molecules, for their hydration.

Once the mixer hopper has been filled, the residence time to achieve a homogenous mix was approximately 15 minutes.

The mixer hopper was open in order to easily release heat that is created from the neutralization reaction thereby avoiding the risk of high temperatures, which can cause oxidation of the iron ferrous to become iron ferric.

The final product, which was a modified grade of iron sulphate heptahydrate, was obtained with this process was a free-flowing copperas having the composition shown in the Table 3:

**Table 3:**

| **Modified Grade of Iron Sulphate Heptahydrate** | |
|---|---|
| | **Weight % (based on the total weight of this product)** |
| FeS0₄·H₂O | 95.00 % |
| FeS04·4H2O | |
| FeS04·7H2O | |
| (Ca+Mg)₂SO₄ | 1.50% |
| H₂O | 4.50% |
| | |

It was found that the modified grade of iron sulphate heptahydrate had low moisture content, was free-flowing, and was non-dusty.

## Claims

1. A process for producing a modified grade of iron sulphate heptahydrate comprising: (i) adding iron sulphate monohydrate and an alkali compound to iron sulphate heptahydrate; and (ii) mixing the ingredients and allowing the ingredients to react for a time period sufficient to form the modified grade of iron sulphate heptahydrate; and wherein the iron sulphate monohydrate comprises at least 25 weight % iron and at most 3 weight % free acid based on the total weight of the iron sulphate monohydrate.

2. The process according to Claim 1, wherein the iron sulphate heptahydrate comprises from 18 weight % to 20 weight % iron and comprises at most 3 weight % free acid based on the total weight of the iron sulphate heptahydrate.

3. The process according to Claim 1 or 2, wherein the alkali compound comprises calcined dolomite, magnesium oxide, calcium oxide, calcium hydroxide, magnesium hydroxide, or combinations thereof.

4. The process according to any one of Claims 1 to 3, wherein the iron sulphate monohydrate comprises at least 5 weight % of the total weight of the ingredients used to form the modified grade of iron sulphate heptahydrate.

5. The process according to any one of Claims 1 to 4, wherein the iron sulphate heptahydrate comprises at least 70 weight % of the total weight of the ingredients used to form the modified grade of iron sulphate heptahydrate.

6. The process according to any one of Claims 1 to 5, wherein the alkali compound comprises from 1 weight % to 10 weight % of the total weight of the ingredients used to form the modified grade of iron sulphate heptahydrate.

7. The process according to any one of Claims 1 to 6, wherein the iron sulphate heptahydrate is a by-product of the manufacturing process of titanium dioxide.

8. The process according to any one of Claims 1 to 7, wherein the alkali compound is added in an amount sufficient to raise the pH of the modified grade of iron sulphate heptahydrate to a pH ≥ 2.

9. The process according to any one of Claims 1 to 8, wherein the process comprises: (I) forming an iron sulphate monohydrate compound, wherein the compound comprises at least 25 weight % iron and at most 3 weight % free acid based on the total weight of the iron sulphate monohydrate, by heating iron sulphate heptahydrate for a time and at a temperature sufficient to form the iron sulphate compound; (II) adding the iron sulphate monohydrate compound of step (I) and an alkali compound to a portion of iron sulphate heptahydrate that is to be converted to the modified grade; and (III) mixing the ingredients of step (II) and allowing the ingredients to react for a time period sufficient to form the modified grade of iron sulphate heptahydrate.

10. The process according to Claim 9, wherein the iron content of the modified grade of iron sulphate heptahydrate comprises ≥ 20 weight % iron based on the total weight of the modified grade of iron sulphate heptahydrate.
